# FASCICULE DE BREVET EUROPEEN

(11) **EP 0 857 844 B1**
(45) Date de publication et mention de la délivrance du brevet: **11.12.2002**
(21) Numéro de dépôt: 98400282.4
(22) Date de dépôt: 09.02.1998
(51) Int. Cl.: E05D 15/10

(54) **Dispositif de guidage pour un panneau coulissant et louvoyant d'obturation d'une baie**
Führungsvorrichtung für einen Öffnungsabschluss-Schwenk-Schiebeflügel
Guiding device for a sliding and swaying wing closing an opening

(30) Priorité: 10.02.1997 FR 9701488
(43) Date de publication de la demande: 12.08.1998
(73) Titulaire: Wagon Automotive, 79300 Bressuire (FR)
(72) Inventeur: Memeteau, Michel, 79330 St-Varent (FR)
(74) Mandataire: Vidon, Patrice

(56) Documents cités:
- WO-A-93/18261
- DE-A- 1 963 309
- DE-A- 3 639 998
- GB-A- 2 133 460
- US-A- 2 570 563
- US-A- 4 862 640

## Description

La présente invention concerne un dispositif de guidage pour un panneau coulissant et louvoyant d'obturation d'une baie, utilisé notamment mais non exclusivement dans les véhicules automobiles.

Certains véhicules, utilitaires ou de tourisme, sont équipés, pour assurer l'obturation d'une baie de fenêtre ou de porte, d'un panneau coulissant et louvoyant, mobile entre des positions d'obturation et d'ouverture de la baie délimitée par un élément de structure tel qu'une vitre fixe latérale ou un panneau de carrosserie formant le flanc ou le toit du véhicule. Ce panneau est guidé par un dispositif de guidage comportant un premier et un second rails de guidage montés fixes sur l'élément de structure de la baie, de part et d'autre de cette baie, et sur lesquels le panneau est monté pour coulisser selon une direction longitudinale de coulissement entre sa position d'ouverture et une position intermédiaire de dégagement dans laquelle il est en regard de la baie et dégagé de celle-ci. Des moyens d'enchâssement assurent la liaison du panneau avec les rails de guidage de façon à permettre un déplacement transversal du panneau entre sa position intermédiaire de dégagement dans laquelle il est en regard et en retrait transversal de la baie, et sa position d'obturation dans laquelle il est enchâssé dans la baie.

Cette composition de mouvements de coulissement longitudinal et d'enchâssement transversal est particulièrement avantageuse, car elle permet une ouverture du panneau le long du véhicule (par exemple parallèlement au flanc de celui-ci) tout en assurant à la fermeture, un enchâssement du panneau dans la baie. En particulier, le contact ainsi obtenu entre le panneau et l'élément de structure de la baie assure une bonne étanchéité tant à l'eau qu'à l'air. De plus, le panneau peut être monté de façon à affleurer l'élément de structure du véhicule lorsqu'il est enchâssé dans la baie.

Dans les dispositifs de guidage les plus répandus, les moyens d'enchâssement du panneau sont réalisés sous la forme d'un prolongement des rails de guidages par une partie d'extrémité en courbe dirigée vers l'intérieur du véhicule. L'enchâssement du panneau s'effectue donc en fin de course, simultanément au coulissement. Les galets associés au panneau qui coopèrent avec ces rails de guidages doivent posséder un certain degré de liberté pour pouvoir rouler ou glisser sans inconvénient ni frottement trop important dans les parties courbes des rails de guidages. Les galets sont donc montés légèrement flottants ou oscillants sur le panneau et/ou dans les rails de guidages, ce qui présente un inconvénient dans le fait qu'il existe un jeu dans la liaison du panneau à la structure du véhicule par l'intermédiaire de ces rails de guidages et galets. Ce jeu est siège de vibrations du panneau, elles-mêmes génératrices d'usure et de bruit, et ce tant en position d'ouverture que d'obturation, sauf à prévoir des moyens supplémentaires de maintien du panneau tendant à rattraper les jeux mécaniques.

On connaît par ailleurs, notamment du document DE 19 63 309, un dispositif de guidage dans lequel les moyens d'enchâssement comportent, pour relier le panneau respectivement aux premier et second rails, au moins un premier et un second organes d'articulation possédant chacun une extrémité montée sur le rail de guidage concerné pour coulisser selon la direction de coulissement et pivoter autour d'un axe parallèle à cette direction, et une extrémité opposée articulée à un bord correspondant du panneau autour d'un axe parallèle à la direction de coulissement.

Avec un tel agencement, le mouvement transversal d'enchâssement ou de dégagement du panneau d'une part et le coulissement longitudinal de ce panneau d'autre part sont dissociés l'un de l'autre. L'enchâssement et le dégagement du panneau par rapport au élément de structure de la baie s'effectuent grâce au pivotement des deux organes d'articulation qui agissent comme des biellettes pour permettre un déplacement transversal (c'est-à-dire sensiblement perpendiculaire à la direction de coulissement du panneau) sans que ce déplacement transversal ne soit accompagné d'un coulissement du panneau sur les rails.

Toutefois, les mécanismes existants de ce type s'avèrent le plus souvent compliqués et coûteux, notamment en ce qui concerne le verrouillage du panneau en position d'obturation. Ils sont de plus relativement massifs, ce qui les rend inesthétiques et parfois même difficiles à intégrer. Ce caractère massif est notamment dû aux mécanismes de verrouillage du panneau qui doivent, en position d'obturation, présenter des caractéristiques mécaniques élevées de résistance à l'effraction. Or, dans le cadre des applications spécifiques aux véhicules, plus particulièrement visées par l'invention, il est primordial que le dispositif de guidage puisse être facilement intégré sur tout type de véhicule et dans n'importe quelle configuration (vitre latérale affleurante, portière coulissante, toit ouvrant) sans pénaliser son esthétique tant extérieure qu'intérieure.

Un but de l'invention est précisément de concevoir un dispositif du type précité, dont la structure métallique soit simplifiée pour une meilleure esthétique tout en permettant de faciliter et de simplifier la manipulation du panneau et notamment son verrouillage en position d'obturation.

L'invention a donc pour objet, un dispositif de guidage selon la revendication 1.

Avantageusement, lorsque le panneau est dans sa position d'obturation, les deux axes de pivotement du premier organe d'articulation d'une part et les deux axes de pivotement du second organe d'articulation d'autre part définissent respectivement un premier plan et un second plan qui sont approximativement perpendiculaires entre eux, le premier plan du premier organe d'articulation étant sensiblement plus incliné par rapport au panneau que le second plan du second organe d'articulation.

Ainsi, lorsque le panneau est dans sa position d'obturation, le premier organe d'articulation s'oppose au déplacement transversal du bord correspondant du panneau vers sa position de dégagement, ou tout au moins, n'autorise un tel déplacement transversal qu'avec un déplacement simultané parallèlement au panneau et en direction du second rail de guidage. Or, le second organe d'articulation, qui est associé à ce second rail de guidage, est orienté de telle sorte que le second plan défini par ses deux axes d'articulation soit sensiblement perpendiculaire au premier plan du premier organe d'articulation, et donc faiblement incliné par rapport au panneau. Il s'en suit que le second organe d'articulation s'oppose à tout déplacement du premier organe d'articulation et du bord correspondant du panneau . Le verrouillage complet du panneau peut dès lors être obtenu par la seule mise en place d'un verrou de butée transversale s'opposant au dégagement du bord du panneau adjacent au second organe d'articulation et agissant soit sur le second organe d'articulation soit sur le bord correspondant du panneau. Aucun autre organe de verrouillage n'est nécessaire au voisinage du premier organe d'articulation et du bord correspondant du panneau.

En ce qui concerne l'orientation relative des premier et second organes d'articulation, il doit être compris que l'expression "approximativement perpendiculaire" a été choisie pour donner une définition claire et concise de l'invention, mais ne doit pas être interprétée de façon trop restrictive. Cette formulation doit être comprise en ce sens que les plans des deux organes d'articulation ne sont pas exactement perpendiculaires, mais davantage perpendiculaires que parallèles. Autrement dit, ils forment entre eux un angle supérieur à 45°.

Dans un mode de réalisation avantageux, en position d'obturation, le premier plan du premier organe d'articulation est approximativement perpendiculaire au panneau, tandis que le second plan du second organe d'articulation et sensiblement parallèle au panneau.

Selon une caractéristique avantageuse de l'invention, le second organe d'articulation forme avec le panneau un élément de genouillère arc-bouté, forçant le panneau en appui contre une surface de butée fixe par rapport au élément de structure. L'arc-boutement du second organe d'articulation assure une immobilisation ferme du panneau avec rattrapage des jeux éventuels, à la façon d'une genouillère.

Selon un autre aspect avantageux de l'invention, le panneau est pourvu, au voisinage de son bord correspondant au second organe d'articulation, d'un organe de verrouillage qui est mobile entre une position escamotée et une position verrouillée dans laquelle il est rappelé élastiquement, et qui, lorsqu'il est en position verrouillée et que le panneau est dans sa position d'obturation de la baie, coopère avec le second rail de guidage pour maintenir le panneau dans cette position.

Avantageusement alors, l'organe de verrouillage coopère avec le second rail de guidage pour maintenir le panneau dans sa positon intermédiaire de dégagement. L'organe de de verrouillage coopère avec le second rail de guidage par par une surface de came de façon à exercer un effort de rappel permanent du panneau vers sa position intermédiaire de dégagement. L'organe de verrouillage assure ainsi un maintien ferme du panneau aussi bien en position d'obturation dans l'élément de structure de la baie qu'en qu'en position de dégagement. On évite de cette manière vibration, bruit et usure.

Avantageusement, l'organe de verrouillage coopère avec le second rail de guidage pour bloquer le coulissement du panneau dans une position d'ouverture quelconque, totale ou partielle, longitudinalement décalée par rapport à la baie. On peut alors prévoir, dans un mode de réalisation avantageux, que l'organe de verrouillage comporte une came mobile entre une position de déverrouillage dans laquelle elle est écartée du second rail de guidage et une position de verrouillage dans laquelle elle prend appui sur le second rail de guidage pour repousser transversalement le panneau, soit dans sa position d'obturation enchâssée lorsque le panneau est initialement en position intermédiaire de dégagement en regard de la baie, soit dans sa position de blocage, en appui serré contre un élément de structure associé au élément de structure de la baie, lorsque le panneau est initialement en position d'ouverture quelconque.

D'autre part, pour un panneau disposé dans un plan sensiblement vertical, le premier rail de guidage et le premier organe d'articulation sont disposés supérieurement tandis que le second rail de guidage et le second organe d'articulation sont disposés inférieurement. Dans ce cas, afin de faciliter le coulissement et d'éviter les risques de bruit et de coincement en position intermédiaire de dégagement à coulissement libre, le panneau est, dans cette position dégagée, suspendu au rail supérieur de guidage par l'organe d'articulation supérieur, sans appui vertical de l'organe d'articulation inférieur contre le rail inférieur de guidage.

Selon encore un autre aspect avantageux de l'invention, la première extrémité de chaque organe d'articulation constitue un patin longitudinal cylindrique qui est reçu dans une surface de guidage en creux du rail de guidage correspondant. La fabrication et le montage sont ainsi simples et peu coûteux.

L'un au moins des deux organes d'articulation peut être réalisé en une pièce, sous la forme d'un profilé s'étendant sur toute la longueur du bord de la baie.

A l'inverse, l'un au moins des deux organes d'articulation peut se composer d'au moins deux biellettes indépendantes articulées chacune au panneau et au rail de guidage correspondant indépendamment l'une de l'autre.

On pourra d'autre part prévoir, que les rails de guidage soient galbés dans un plan sensiblement perpendiculaire à la baie, afin d'épouser la forme de la paroi dans laquelle est ménagée la baie et sur laquelle les rails de guidage sont fixés.

D'autres caractéristiques et avantages de l'invention ressortiront à la lecture de la description qui suit de trois modes de réalisation particuliers non limitatifs de l'invention.

Il sera fait référence aux dessins annexés, parmi lesquels :
- la figure 1 est une vue en perspective d'une baie équipée d'un panneau associé à un dispositif de guidage selon un premier mode de réalisation de l'invention;
- la figure 2 est une vue partielle agrandie en perspective du panneau articulé aux organes d'articulation selon le premier mode de réalisation ;
- la figure 3 est une vue en coupe transversale de la baie et du panneau, le panneau étant dans sa position d'obturation ;
- la figure 4 est une vue analogue à la figure 3, le panneau étant dans sa position intermédiaire de dégagement à coulissement libre ;
- la figure 5 est une vue partielle agrandie de la zone du premier organe d'articulation, le panneau étant dans sa position d'obturation représentée à la figure 3 ;
- la figure 6 est une vue analogue à la figure 5 de la zone du second organe d'articulation ;
- la figure 7 est une vue analogue à la figure 1, illustrant un second mode de réalisation de l'invention ;
- la figure 8 est une vue partielle agrandie en perspective du bord inférieur du panneau avec son second organe d'articulation selon le second mode de réalisation de l'invention ;
- la figure 9 est une vue analogue aux figures 1 et 7, illustrant un troisième mode de réalisation de l'invention ;
- les figures 10 et 11 sont des vues en coupe transversale de la baie et du panneau en position d'obturation, respectivement selon le plan X de la figure 9 qui coupe les deux organes d'articulation, et selon le plan XI de la figure 9 qui coupe le premier organe d'articulation et l'organe de verrouillage ;
- la figure 12 est une vue de détail en coupe selon la ligne XII-XII de la figure 11 ;
- les figures 13, 14 et 15 sont des vues analogues respectivement aux figures 10, 11 et 12, le panneau étant dans sa 'position intermédiaire de dégagement à coulissement libre,
- les figures 16, 17 et 18 sont des vues analogues respectivement aux figures 10, 11 et 12, le panneau étant dans sa position de blocage ouvert.

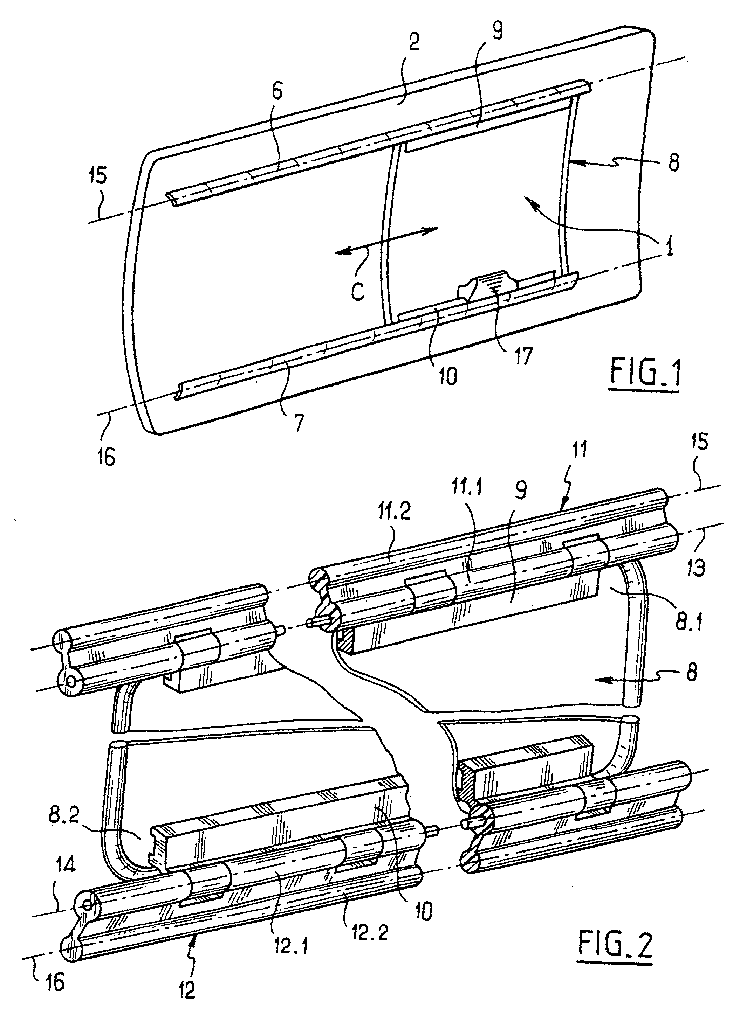

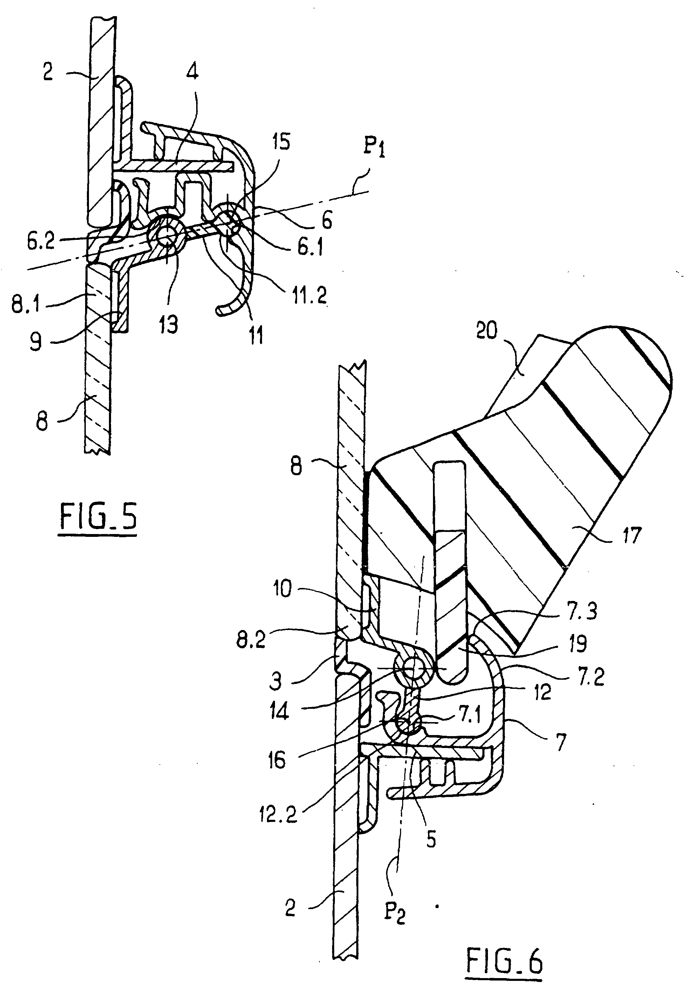

En référence aux figures 1 à 6 qui illustrent un premier mode d'exécution d'un dispositif de guidage conforme à l'invention, une baie 1 est ménagée dans une paroi 2 de la structure d'un véhicule. La paroi 2 est ici réalisée en tôle, mais pourrait également être constituée par une vitre latérale fixe d'un véhicule. D'autre part, dans la description qui suit on considérera que la paroi 2 est disposée verticalement et constitue une vitre ou un élément de carrosserie latéral du véhicule. Mais il serait également possible que la paroi soit disposée à l'horizontale et constitue le toit du véhicule. En outre, la paroi 2 est ici légèrement galbée autour d'une direction horizontale. Un joint 3 est solidaire de la paroi 2 et encadre la baie 1.

Une réglette support supérieure 4 et une réglette support inférieure 5 sont respectivement fixées, par exemple par rivetage ou collage, le long du bord supérieur et le long du bord inférieur de la baie 1, et portent respectivement un rail de guidage supérieur 6 et un rail de guidage inférieur 7 rectilignes, disposés selon une direction longitudinale de coulissement horizontale C. Chaque réglette support 4, 5 comporte une languette longitudinale insérée dans une rainure correspondante ménagée dans chaque rail de guidage 6, 7.

La baie 1 est sélectivement obturée et découverte par un panneau 8 qui est monté coulissant sur les rails 6 et 7, et qui est ici constitué par une vitre. Ce panneau 8 est relié aux rails de guidage supérieur 6 et inférieur 7 respectivement par l'intermédiaire de premier et second organes d'articulation 11, 12 qui exercent des fonctions de biellettes pour assurer, en position d'obturation, un enchâssement du panneau 8 dans la baie 1, comme cela sera mieux expliqué ultérieurement.

Chaque organe d'articulation 11, 12 a la forme d'un profilé ayant un premier bord (extrémité) longitudinal 11.1, 12.1 articulé à un profilé support 9, 10 solidaire du bord longitudinal correspondant 8.1, 8.2 du panneau 8 pour pivoter autour d'un axe longitudinal 13, 14 parallèle aux rails de guidage 6, 7.

Chacun des premier et second organes d'articulation 11, 12 possède un second bord (extrémité) longitudinal 11.2, 12.2 opposé au bord longitudinal 11.1, 12.1, monté sur le rail de guidage correspondant 6, 7 pour pivoter et coulisser selon un axe longitudinal 15, 16 parallèle à la direction de coulissement C. En l'espèce, ce second bord possède une surface d'extrémité de forme cylindrique et constitue ainsi un patin qui est reçu à pivotement et à coulissement dans un logement associé du rail de guidage correspondant 6, 7 ayant une surface interne 6.1, 7.1 cylindrique.

Une poignée 17 de manoeuvre du panneau 8 est fixée sur la partie inférieure du panneau 8, au voisinage de son bord inférieur 8.2. La poignée 17 comporte un pêne de verrouillage escamotable 19 commandé par une gâchette 20.

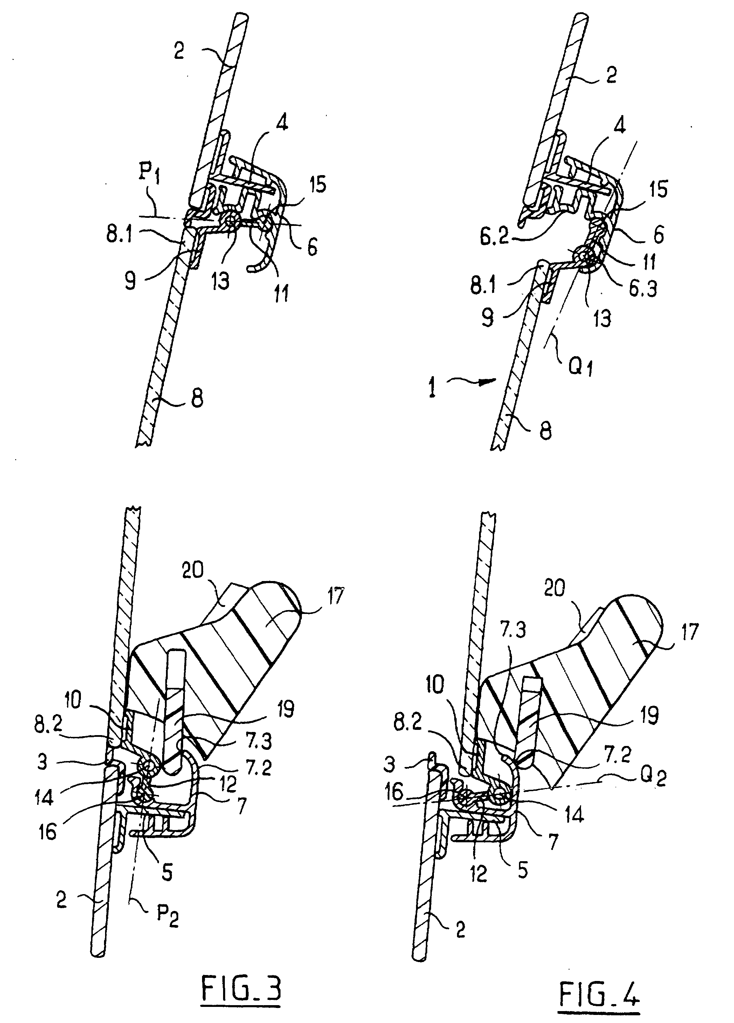

Aux figures 3, 5 et 6, le panneau 8 est représenté dans sa position d'obturation, enchâssé dans la baie. Dans cette position, le panneau 8 est en appui contre le joint 3 et est sensiblement aligné avec la paroi 2, de sorte que, dans le cas où la paroi 2 est un élément de carrosserie ou une vitre latérale de véhicule, la face extérieure du panneau 8 affleure le flanc du véhicule.

Le profilé support 9 solidaire du premier organe d'articulation 11 est en butée sur une première surface de butée 6.2 du rail de guidage supérieur 6 de telle sorte que le plan P1 défini par les axes de pivotement 13, 15 du premier organe d'articulation 11 soit sensiblement perpendiculaire au panneau 8. Le second organe d'articulation 12 est quant à lui dans une position où le plan P2 défini par ses axes de pivotement 14, 16 par rapport au profilé support 10 et au rail de guidage inférieur 7 est sensiblement perpendiculaire au plan P1 défini par le premier organe d'articulation, c'est-à-dire sensiblement parallèle au panneau 8. Plus précisément, le plan P1 forme avec le panneau 8 un angle d'environ 85°, tandis que le plan P2 forme avec ce panneau un angle d'environ 5°.

Dans cette position d'obturation, le second organe d'articulation 12 tend à appliquer en force le profilé support 9 sur la première surface de butée 6.2 et donc à appliquer la partie supérieure du panneau 8 contre le joint 3. Le second organe d'articulation 12 forme ainsi avec le panneau 8 un élément de genouillère qui s'arc-boute en position d'obturation sous l'effet de l'effort de poussée extérieur exercé par l'utilisateur sur la poignée 17. Cet arc-boutement permet d'assurer un blocage ferme du panneau 8 en position d'obturation, avec rattrapage des jeux.

Le pêne de verrouillage 19 est en butée contre un bord 7.3 du rail de guidage inférieur 7 et maintient ainsi la partie inférieure du panneau 8 contre le joint 3. De plus, le pêne 19 forme une butée pour le second organe d'articulation 12, de manière à le maintenir dans sa position où le plan P2 est parallèle au panneau 8, ce qui renforce l'efficacité du verrouillage par genouillère.

Le panneau 8 peut être dégagé de sa position d'enchâssement dans la baie 1 en agissant sur la gâchette 20 pour escamoter le pêne 19 et libérer ainsi le bord inférieur 8.2 du panneau 8. Un effort de traction exercé sur la poignée 17 provoque le basculement du second organe d'articulation 12 et du bord inférieur 8.2 autour de l'axe 16 par rapport au rail de guidage inférieur 7. Ce basculement est accompagné de celui du premier organe d'articulation 11 et du bord supérieur 8.1.

A la figure 4, le panneau 8 est représenté en position dégagée. Le panneau 8 est alors situé légèrement en retrait de la baie et peut coulisser librement sur les rails de guidage 6, 7.

Dans cette configuration, le profilé support 9 est en butée sur une seconde surface de butée 6.3 du rail de guidage supérieur 6 de telle sorte que le plan Q1 défini par les axes de pivotement 13, 15 du premier organe d'articulation 11 par rapport au profilé support 9 et au rail de guidage supérieur 6 soit sensiblement parallèle au panneau 8. Le second organe d'articulation 12 est quant à lui dans une position où le plan Q2 défini par ses axes de pivotement 14, 16 par rapport au profilé support 10 et au rail de guidage inférieur 7 est sensiblement perpendiculaire au panneau 8.

Le pêne de verrouillage 19 présente une extrémité libre arrondie qui coopère avec une surface de came 7.2 du rail de guidage 7 adjacente au bord 7.3, de façon à rappeler le bord inférieur 8.2 du panneau 8 à l'opposé de sa position d'encastrement dans la baie 1, c'est-à-dire en position de dégagement. Dans sa position de dégagement, le panneau 8 peut coulisser librement selon la direction de coulissement C, l'extrémité du pêne 19 glissant sur la surface 7.2 du rail de guidage inférieur 7. Le coefficient de frottement entre le pêne 19 et le rail de guidage 7 sera choisi de façon tout à la fois à permettre le coulissement du panneau sans actionner la gâchette 20 pour rétracter le pêne 19 et à immobiliser le panneau dans une position quelconque sur les rails en l'absence de tout action extérieure. Mais il sera également possible de prévoir un fort coefficient de frottement entre le pêne 19 et le rail 7, de manière que le panneau soit fermement immobilisé sur le rail et que son coulissement nécessite d'actionner la gâchette 20 pour rétracter le pêne 19.

Lorsque le panneau 8 doit être fermé pour obturer la baie 1, il convient préalablement d'amener celui-ci dans sa position intermédiaire de dégagement dans laquelle il est situé sensiblement en regard de la baie tout en étant légèrement en retrait de celle-ci. L'enchâssement du panneau 8 dans la baie 1 s'effectue alors de façon extrêmement aisée en exerçant sur la poignée 17 un effort de poussée qui, grâce à l'inclinaison de la surface de came 7.2, provoque la rétraction automatique du pêne de verrouillage 19 et le basculement du second organe d'articulation 12 et du bord inférieur 8.2 vers la baie 1. Ce basculement est accompagné de celui du premier organe d'articulation 11 et du bord supérieur 8:1. Lorsque le panneau 8 parvient dans sa position d'obturation dans laquelle il est enchâssé dans la baie 1, le pêne de verrouillage 19, ayant franchi le bord 7.3, est rappelé élastiquement vers sa position de verrouillage. Le bord 7.3 du rail de guidage inférieur 7 forme alors pour le doigt 19 une butée immobilisant le bord inférieur 8.2 du panneau 8 dans sa position enchâssée.

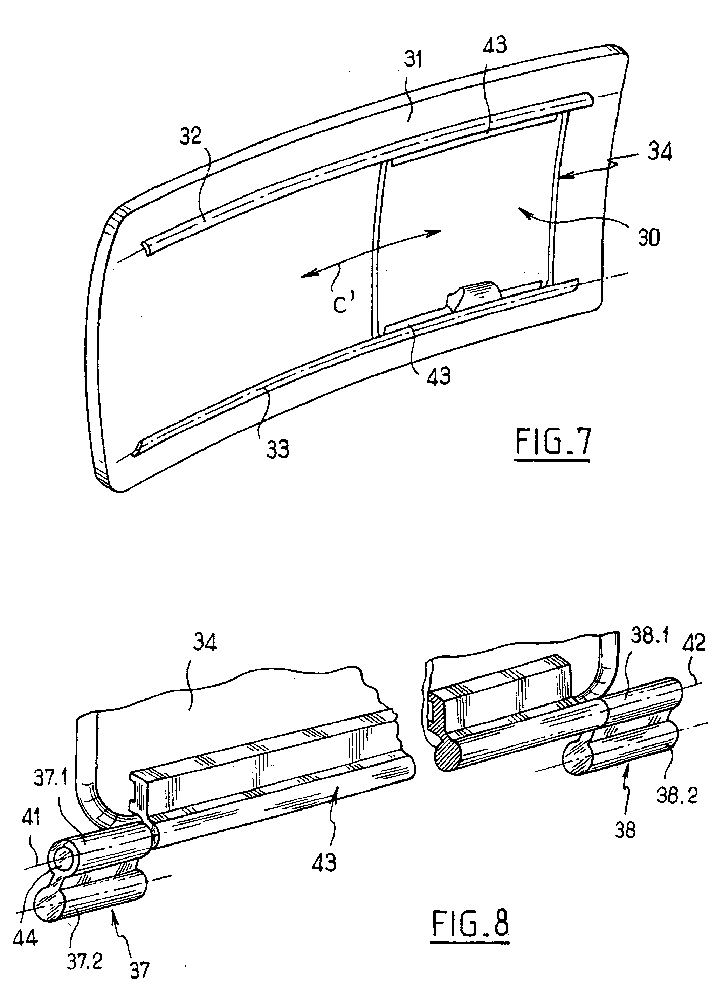

Les figures 7 et 8 illustrent un second mode de réalisation d'un dispositif de guidage conforme à l'invention. Dans ce second mode, une baie 30 est ménagée dans une paroi 31 qui est galbée, non seulement autour d'un axe horizontal comme dans le premier mode de réalisation, mais également autour d'un axe vertical. La paroi 31 présente donc une surface extérieur torique.

Comme précédemment, la paroi 31, qui forme l'élément de structure de la baie 30, est équipée de deux rails de guidage 32, 33 adjacents respectivement aux bords longitudinaux supérieur et inférieur de la baie 30. Ces rails de guidage épousent la forme galbée de la paroi 31 et sont par conséquent galbés autour d'une direction verticale, c'est-à-dire dans un plan horizontal sensiblement perpendiculaire à la paroi 31 et à la baie 30. Un panneau 34 de même galbe que la paroi 31 est monté coulissant, selon une direction de coulissement C' légèrement incurvée, sur les rails 32, 33 pour obturer sélectivement la baie 30.

Le panneau 34 est relié aux rails 32 et 33 par l'intermédiaire de deux paires de biellettes d'articulations.

Les biellettes 37 et 38 de chaque paire possèdent une extrémité 37.1, 38.1 articulée à une extrémité du bord correspondant du panneau 34 pour pivoter librement autour d'un axe 41, 42 parallèle à la tangente à cette extrémité 37.1, 38.1. Comme précédemment, les biellettes 37, 38 sont reliées au panneau 34 par l'intermédiaire d'un profilé support 43 dont chacune des extrémités est équipée d'un doigt d'articulation 44 sur lequel est monté la biellette correspondante.

Chaque biellette 37, 38 possède une extrémité 37.2, 38.2 opposée à l'extrémité 37.1, 38.1 qui est articulée au profilé support 43. Cette extrémité 37.2, 38.2 présente une surface cylindrique d'axe sensiblement parallèle à l'axe 41, 42 d'articulation de la biellette au profilé support 43, et forme ainsi un patin qui coopère avec le rail de guidage 32, 33 correspondant.

Le fait que les biellettes d'articulation 37, 38 soient de faibles longueurs et indépendantes l'une de l'autre procure à ces biellettes une liberté de mouvement qui permet d'assurer l'articulation des bords supérieur et inférieur du panneau 34 aux rails de guidage 32, 33 malgré la courbure de ces deux rails.

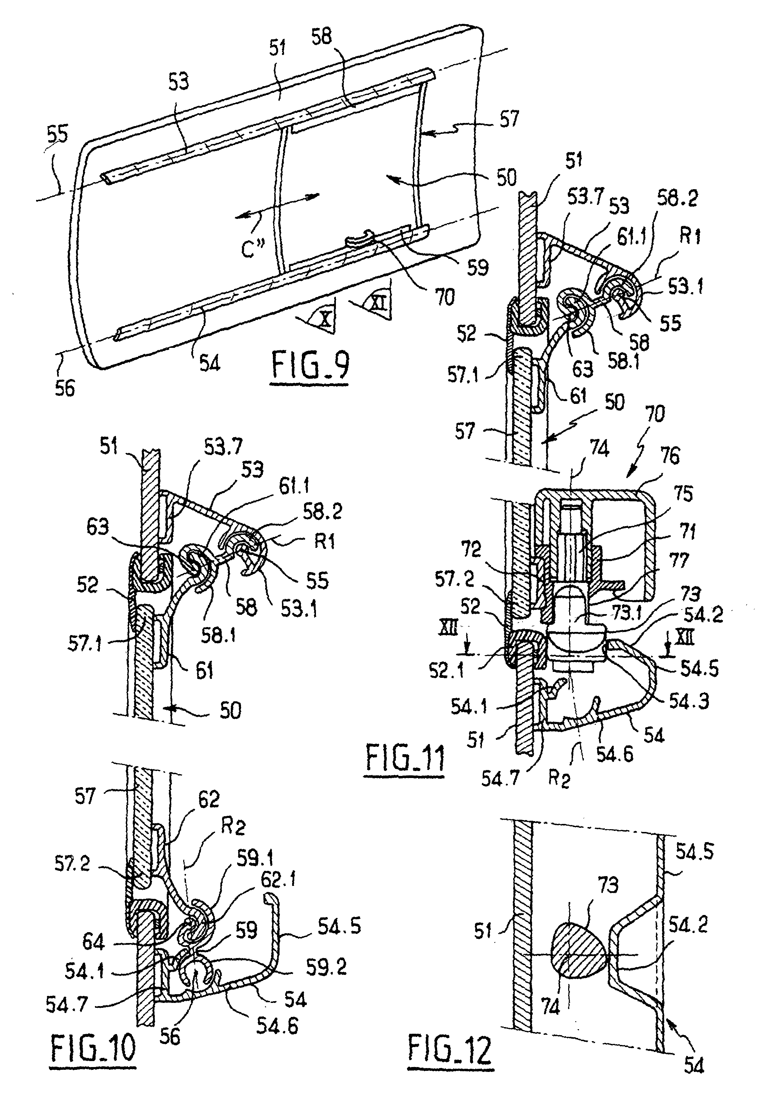

Les figures 9 à 18 illustrent un troisième mode de réalisation d'un dispositif de guidage conforme à l'invention. Dans ce troisième mode, une baie 50 est ménagée dans une paroi 51 sensiblement verticale telle qu'un élément latéral de carrosserie de véhicule. Un joint 52, solidaire de la paroi 51, encadre la baie 50. Un rail de guidage supérieur 53 et un rail de guidage inférieur 54 sont disposés de part et d'autre de la baie 50, selon des axes respectifs 55 et 56 parallèles à une direction longitudinale de coulissement horizontale C". les deux rails 53, 54 sont ici des profilés d'aluminium fixés à leur base 53.7, 54.7 sur la face intérieure de la paroi 51 (par exemple par collage). Le rail inférieur 54 présente la forme d'une cornière ayant une ailette horizontale 54.6 raccordée à la base 54.7 et une ailette verticale 54.5 formant un rebord vertical tourné vers le haut.

La baie 50 est sélectivement obturée et découverte par un panneau 57 qui est monté coulissant sur les rails 53 et 54. Ce panneau 57 est relié aux rails de guidage supérieur 53 et inférieur 54 respectivement par l'intermédiaire d'un organe d'articulation supérieur 58 et d'un organe d'articulation inférieur 59 qui, comme précédemment, exercent des fonction de biellettes pour assurer, en position d'obturation, un enchâssement du panneau 57 dans la baie 50.

L'organe d'articulation supérieur 58 se présente sous la forme d'un profilé continu en aluminium s'étendant sur la quasi-totalité de la longueur du bord supérieur du panneau 57. L'organe d'articulation inférieur 59 est quant à lui réalisé en deux tronçons de profilés en aluminium séparés par un organe de verrouillage 70 qui sera décrit plus en détail ultérieurement.

Chacun des organes d'articulation 58, 59 possède un premier bord (extrémité) longitudinal 58.1, 59.1 articulé à un profilé support 61, 62 dont la base est fixée (par exemple par collage) sur la face intérieure du bord longitudinal correspondant 57.1, 57.2 du panneau 57 pour pivoter autour d'un axe longitudinal 63, 64 parallèle à l'axe 55, 56 du rail 53, 54 correspondant. De même, chacun des organes d'articulation 58, 59 possède un second bord (extrémité) longitudinal 58.2, 59.2 qui est reçu dans une glissière 53.1, 54.1 d'axe 55, 56 du rail de guidage correspondant 53, 54.

Les formes particulières des-sections des deux bords longitudinaux 58.1, 58.2 des profilés 58, 59, des bords libres 61.1, 61.2 des profilés support 61, 62, et des glissières 53.1, 54.1 des rails de guidage 53, 54 sont définies par les dessins des figures 10, 11, 13, 14, 16 et 17. Ces formes particulières offrent de nombreux avantages, tant en ce qui concerne le fonctionnement propre du mécanisme que sa fabrication et son montage.

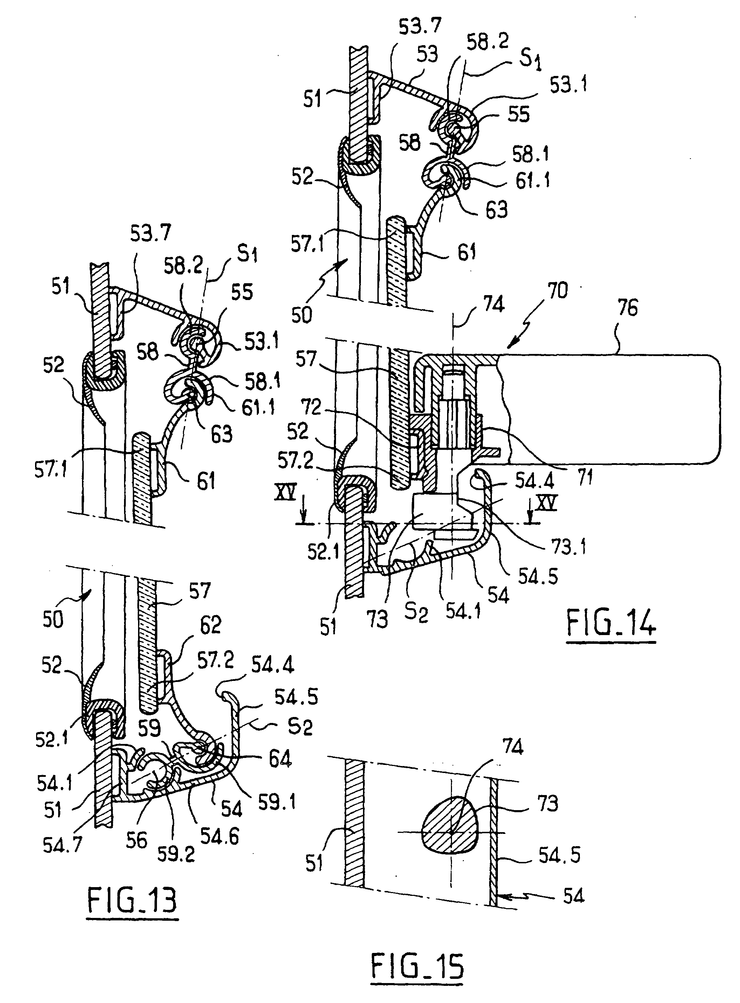

On notera en particulier que, à la différence des modes de réalisation précédemment décrits, la liaison articulée du second bord longitudinal 58.2 de l'organe d'articulation supérieur 58 avec la glissière 53.1 du rail de guidage 53 résiste à une sollicitation en traction, et non pas seulement en compression. Ainsi, en position de dégagement à coulissement libre, comme illustré par la figure 14, le panneau 57 est suspendu au rail supérieur de guidage 53 par son organe d'articulation supérieur 58, sans que son organe d'articulation inférieur 59 ne soit en appui vertical contre le rail inférieur de guidage 54. Cette disposition particulière en position de coulissement permet d'éviter tout risque de coincement ou d'apparition de bruits de grincement lors du coulissement du panneau 57 sur les rails 53, 54.

L'organe de verrouillage 70 exerce une double fonction. D'une part il repousse le panneau 57 dans sa position d'obturation encastrée dans la baie 50 lorsque le panneau 57 est initialement en position intermédiaire de dégagement en regard de la baie 50. D'autre part, il assure le blocage du panneau 57 dans une position d'ouverture quelconque, totale ou partielle (c'est-à-dire décalée de la baie 50), le long des rails de guidage 53, 54.

Plus précisément, l'organe de verrouillage 70 comporte ici un corps 71 qui est fixé, par l'intermédiaire d'une barrette 72, sur la face intérieure du bord inférieur 57.2 du panneau 57. La barrette 72 peut être réalisée en une seule pièce avec la base du profilé support 62.

Une came 73 d'axe vertical 74 est montée sur le corps 71 pour pivoter d'un quart de tour autour de son axe entre des positions de verrouillage et de déverrouillage. En l'espèce, la came 73 est portée par un arbre 77 monté pivotant dans un alésage correspondant du corps 71 et possédant, de part et d'autre de l'alésage, une extrémité inférieure équipée de la came 73 et une extrémité supérieure cannelée 75 qui est en prise avec une poignée de manoeuvre 76 permettant à un utilisateur de faire pivoter l'arbre 77 et la came 73 autour de leur axe 74.

Lorsque le panneau 57 est dans sa position d'obturation, enchâssé dans la baie 50, la configuration du dispositif de guidage selon l'invention est celle représentée aux figures 10 à 12. La périphérie de la face extérieure du panneau 57 est en appui contre le joint 52. Le panneau 57 est sensiblement aligné avec la paroi 51, de sorte que, lorsque la paroi 51 est un élément de carrosserie latérale de véhicule, la face extérieure du panneau 8 affleure le flan du véhicule. Les axes de pivotement 55, 63 de l'organe d'articulation supérieur 58 définissent un plan R1 qui forme avec le panneau 57 un angle d'environ 70°, tandis que les axes de pivotement 56, 64 de l'organe d'articulation inférieur 59 définissent un plan R2 qui forme avec le panneau 57 un angle d'environ 10°. On notera en outre que l'axe de pivotement 63 de l'organe d'articulation supérieur 58 avec le profilé support 61 est situé plus bas et plus près de la paroi 51 que l'axe 55 de pivotement de cet organe d'articulation supérieur 58 avec le rail supérieur de guidage 53. De même, on notera que l'axe de pivotement 64 de l'organe d'articulation inférieur 59 avec le profilé de support 62 est situé plus haut et plus près de la paroi 51 que l'axe 56 de pivotement de l'organe d'articulation inférieur 59 avec le rail inférieur de guidage 54. Les plans R1 et R2 des deux organes d'articulation 58 et 59 forment ainsi entre eux un angle d'environ 80°.

Dans cette configuration, l'organe d'articulation supérieur 58 s'oppose au déplacement transversal du bord supérieur 57.1 du panneau 57 vers sa position de dégagement. En effet, étant donné l'angle relativement important formé par le plan R1 avec le panneau 57 et dans la mesure où l'organe d'articulation supérieur 58 ne peut que pivoter autour de son axe 55 par rapport au rail supérieur de guidage 53, tout déplacement transversal de l'axe 63 est nécessairement accompagné d'un déplacement vertical (parallèlement au panneau 57) simultané de cet axe 63 et donc de l'ensemble du panneau 57 vers le bas, c'est-à-dire en direction du rail inférieur de guidage 54. Comme l'organe d'articulation inférieur 59, qui est associé au rail inférieur de guidage 54, est orienté de telle sorte que son plan R2 soit faiblement incliné par rapport au panneau 57, il en résulte que l'organe d'articulation inférieur 59 forme une butée verticale s'opposant au déplacement vers le bas, et donc au dégagement transversal du bord supérieur 57.1 du panneau 57.

Le verrouillage complet du panneau 57, notamment à l'encontre d'un effort de dégagement exercé au voisinage de son bord inférieur 57.2, est réalisé par l'organe de verrouillage 70 qui s'interpose entre le bord inférieur 57.2 du panneau 57 et le rail inférieur de guidage 54 pour s'opposer à tout déplacement transversal du bord inférieur 57.2 du panneau 57 vers sa position de dégagement.

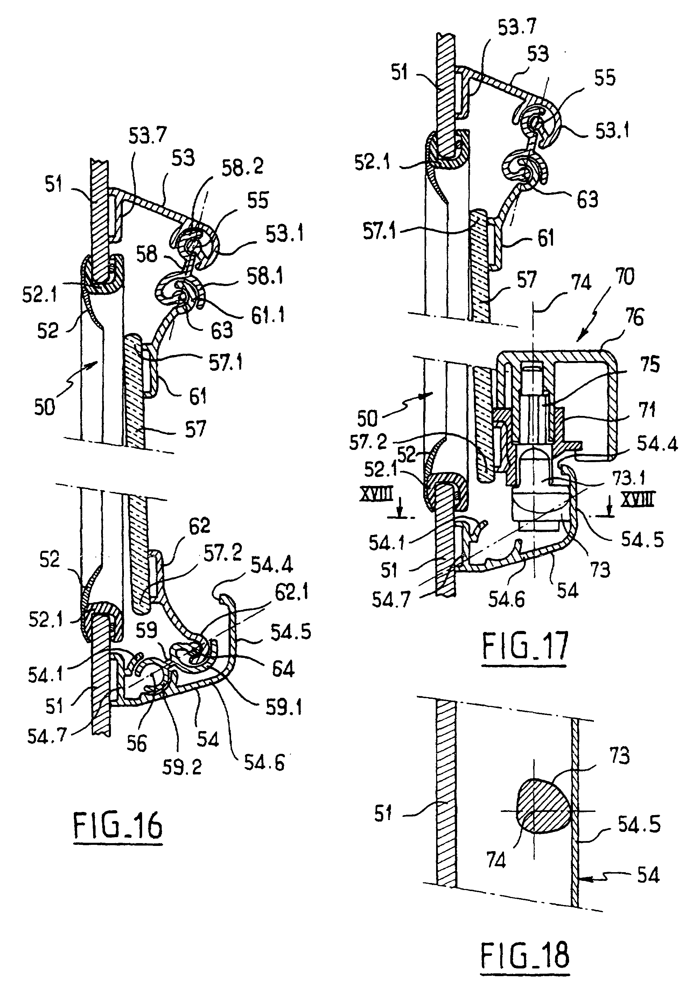

Comme cela est visible aux figures 11 et 12, l'organe de verrouillage 70 est verrouillé, la poignée 76 étant rabattue contre le panneau 8 parallèlement à celui-ci. Dans cette position, la partie la plus excentrée de la came 73 est tournée à l'opposé de la paroi 51 et prend appui contre le bord libre 54.3 d'une saillie intérieure 54.2 ménagée localement sur le rebord vertical 54.5 du rail inférieur de guidage 54 pour repousser le bord inférieur 57.2 du panneau 57 vers sa position d'obturation enchâssée dans la baie 50. Comme cela est visible à la figure 12, la saillie intérieure 54.2 du rail inférieur de guidage 54 est longitudinalement localisée en regard de l'emplacement précis où se trouve la came 73 lorsque le panneau 57 est en regard de la baie 50. Mais dès que le panneau 57 est décalé de la baie 50, ne serait-ce que de quelques centimètres, la came 73 cesse d'être en regard de la saillie intérieure 54.2 du rail inférieur de guidage 54, comme cela est illustré par les figures 15 et 18.

En outre, comme cela est visible à la figure 11, la came 73 est, dans cette position d'obturation, prise en étau entre le bord 54.3 de la saillie 54.2 du rail 54 et la partie de fixation 52.1 du joint 52 chevauchant le pourtour de la paroi 51 délimitant la baie 50. La came 73 de l'organe de verrouillage 70 s'oppose ainsi non seulement au dégagement du bord inférieur 57.2 du panneau 57 vers l'intérieur en venant en butée contre la saillie 54.2 du rail 54, mais également à son extraction vers l'extérieur (notamment en cas de tentative d'effraction) en venant en butée contre la partie de fixation 52.1 du joint 52.

En position de dégagement du panneau 57, dans laquelle le panneau 57 est situé légèrement en retrait de la baie 50, le dispositif de guidage est dans la configuration illustrée par les figures 13 à 15. Le panneau 57 est suspendu au rail supérieur de guidage 53 par l'organe d'articulation supérieur 58. L'organe d'articulation inférieur 59 ne présente aucun point d'appui vertical contre le rail inférieur de guidage 54. Les axes de pivotement 55, 63 de l'organe d'articulation supérieur 58 définissent un plan Si qui est sensiblement vertical (parallèle au plan de la baie 50), tandis que les axes de pivotement 56, 64 de l'organe d'articulation inférieur 59 définissent un plan S2 qui est sensiblement horizontal (c'est-à-dire sensiblement perpendiculaire au plan de la baie 50). Plus précisément, dans l'exemple illustré, le plan Si forme avec le plan de la baie 50 (c'est-à-dire par rapport à la verticale) un angle d'environ 10°, tandis que le plan S2 forme avec le plan de la baie 50 (c'est-à-dire par rapport à la verticale) un angle d'environ 75°. Les plans Si et S2 forment donc entre eux un angle d'environ 65°.

Dans cette configuration, l'organe de verrouillage 70 est bien entendu déverrouillé, la poignée 66 étant ouverte à angle droit par rapport au panneau 57. Comme cela est mieux visible à la figure 15, la came 73 est tournée à 90° par rapport à sa position de verrouillage illustrée aux figures 11 et 12, de telle sorte que la partie la plus excentrée de la came 73 est tournée en regard de la direction longitudinale du rail 54. La came 73 n'est donc pas en contact avec le rail inférieur de guidage 54 et présente même, pour éviter tout contact, une échancrure 73.1 ménagée en regard du bord intérieur libre 54.4 du rebord vertical 54.5 de ce rail.

Les figures 16 à 18 illustrent le verrouillage du panneau 57 dans une position d'ouverture totale ou partielle, c'est-à-dire décalée par rapport à la baie 50. Comme cela est mieux visible aux figures 17 et 18 l'organe de verrouillage 70 est verrouillé : la poignée 76 est rabattue contre le panneau 57 de façon à placer la came 73 dans sa position de verrouillage qui est illustrée par la figure 18 et qui est identique à celle représentée à la figure 12. Dans cette position, la partie la plus excentrée de la came 73 est tournée en regard du rebord vertical 54.5 du rail inférieur de guidage 54 et prend donc appui contre ce rebord pour repousser transversalement le bord inférieur 57.2 du panneau 57 en direction de la baie 50. Le panneau 57 vient alors en butée contre la partie de fixation 52.1 du joint 52 qui borde la paroi 51 sur le pourtour de la baie 50. L'élasticité et le fort coefficient de friction de la partie de fixation 52.1 du joint 52 (qui est réalisée en élastomère) permettent, du fait de l'effort d'appui exercé par le jeu de coopération de la came 73 avec le rebord 54.5 du rail 54, de réaliser un blocage longitudinal du panneau 57 dans une position d'ouverture quelconque.

## Revendications

1. Dispositif de guidage pour un panneau (8, 34, 57) coulissant et louvoyant, mobile entre des positions d'obturation et d'ouverture d'une baie (1, 30, 50) ménagée dans une vitre fixe ou un panneau de carrosserie d'un véhicule automobile, appelé élément de structure (2, 31, 51),
**caractérisé en ce qu'**il comprend un premier et un second rails de guidage (6, 7, 32, 33, 53, 54) montés fixes sur la face intérieure dudit élément de structure,
au moins un premier organe d'articulation (11, 37, 58) coopérant avec ledit premier rail (6, 32, 53) et au moins un second organe d'articulation (12, 38, 59) coopérant avec ledit second rail (7, 33, 54), une extrémité (11.1, 12.1, 37.1, 37.2, 58.2, 59.2) de chacun desdits organes d'articulation étant solidaires dudit panneau d'obturation (8, 34, 57),
lesdits organes d'articulation (11, 12, 37, 38, 58, 59) étant conçus de façon que ledit panneau d'obturation (8, 34, 57) puisse venir :
- dans une surface de coulissement, parallèle audit élément de structure (2, 31, 51), et dans lequel lesdits éléments d'articulation peuvent coulisser dans les rails de guidage correspondants, selon une direction de coulissement (c, c', c") ;
- dans une surface d'obturation, correspondant audit élément de structure (2, 31, 51), pour obturer ladite baie (1, 30, 50) de façon affleurante,
le passage de ladite surface de coulissement à ladite surface d'obturation, et réciproquement, étant réalisé sensiblement perpendiculairement à la direction de coulissement (c, c', c") sous l'action de moyens de verrouillage (17,19) montés sur au moins un desdits rails de guidage (6, 7, 32, 33, 53, 54), et agissant sur au moins un desdits organes d'articulation (11, 37, 58, 12, 38, 59) de façon que ledit panneau d'obturation (8, 34, 57) reste en permanence sensiblement parallèle au plan défini par ledit élément de structure, l'ensemble des bords s'enchâssent simultanément dans ladite baie (1, 30, 50), lors de la fermeture, et se dégageant simultanément de ladite baie (1, 30, 50) lors de l'ouverture.

2. Dispositif de guidage selon la revendication 1, **caractérisé en ce qu'**il comprend au moins un premier et un second organes d'articulation (11, 12 ; 37, 38, ; 58, 59) possédant chacun une première extrémité (11.2, 12.2 ; 37.2, 38.2 ; 58.2, 59.2) montée sur le rail de guidage concerné (6, 7 ; 32, 33 ; 53, 54) pour coulisser selon la direction de coulissement (c ; c' ; c") et pivoter autour d'un axe (15, 16 ; 55, 56) parallèle à cette direction, et une seconde extrémité (11.1, 12.1; 37.1, 38.1 ; 58.1, 59.1) articulée à bord correspondant (8.1, 8.2 ; 57.1, 57.2) du panneau (8 ; 34 ; 57) autour d'un axe (13, 14; 41, 42 ; 63, 64) parallèle à la direction de coulissement et,
**en ce que**, lorsque le panneau (8, 34, 37) est dans sa position d'obturation, les deux axes de pivotement (13, 15, 63, 65) du premier organe d'articulation (11, 37, 58) d'une part et les deux axes de pivotement (14, 16, 64, 56) du second organe d'articulation (12, 38, 59) d'autre part définissent respectivement un premier plan (P1, R1) et un second plan (P2, R2) qui sont approximativement perpendiculaires entre eux, le premier plan (P1, R1) du premier organe d'articulation (11, 37, 58) étant approximativement plus incliné par rapport au panneau (8, 34, 57) que le second plan (P2, R2) du second organe d'articulation (12, 38, 59).

3. Dispositif de guidage selon la revendication 2, **caractérisé en ce qu'**en position d'obturation, le premier plan (P1, R1) du premier organe d'articulation est approximativement perpendiculaire au panneau (8, 34, 57), tandis que le second plan (P2, R2) du second organe d'articulation est approximativement parallèle au panneau (8, 34, 57).

4. Dispositif de guidage selon la revendication 3, **caractérisé en ce qu'**en position d'obturation, le premier plan (P1, R1) du premier organe d'articulation forme avec le panneau (8, 34, 57) un angle supérieur à 50°, tandis que le second plan (P2, R2) du second organe d'articulation forme avec le panneau (8, 34, 57) un angle inférieur à 40°.

5. Dispositif de guidage selon la revendication 4, **caractérisé en ce qu'**en position d'obturation, le premier plan (P1, R1) du premier organe d'obturation forme avec le panneau (8, 34, 57) un angle supérieur à 70°, tandis que le second plan (P2, R2) du second organe d'articulation forme avec le panneau (8, 34, 57) un angle inférieur à 20°.

6. Dispositif de guidage selon l'une des revendications précédentes, **caractérisé en ce qu'**en position d'obturation du panneau (8), le second organe d'articulation (12) forme avec le panneau un élément de genouillère arc-bouté, forçant la panneau (8) en appui contre une surface de butée (6.2) fixe par rapport à l'élément de structure (2).

7. Dispositif de guidage selon l'une des revendications précédentes, **caractérisé en ce que** le panneau (8, 57) est pourvu, au voisinage de son bord (8.2, 57.2) correspondant au second organe d'obturation (12, 59) d'un organe de verrouillage (19, 70) qui est mobile entre une position déverrouillée escamotée et une position verrouillée, et qui, lorsqu'il est en position verrouillée et que le panneau (8, 57) est dans sa position d'obturation de la baie, coopère avec le second rail de guidage (7, 54) pour verrouiller le panneau (8, 57) dans cette position.

8. Dispositif de guidage selon la revendication 7, **caractérisé en ce que** l'organe de verrouillage (19) coopère élastiquement avec le second rail de guidage (7) pour maintenir le panneau (8) dans sa position intermédiaire de dégagement à coulissement libre.

9. Dispositif de guidage selon la revendication 8, **caractérisé en ce qu'**en position intermédiaire de dégagement du panneau (8), l'organe de verrouillage (19) coopère avec le second rail de guidage (7) par une surface de came (7.2) de façon à exercer un effort transversal de rappel permanent du panneau (8) vers sa position intermédiaire de dégagement.

10. Dispositif de guidage selon la revendication 7, **caractérisé en ce que** l'organe de verrouillage (70) coopère avec le second rail de guidage (54) pour bloquer le coulissement du panneau (57) dans une position d'ouverture quelconque, totale ou partielle, longitudinalement décalée par rapport à la baie.

11. Dispositif de guidage selon la revendication 10, **caractérisé en ce que** l'organe de verrouillage (70) comporte une came (73) mobile entre une position de déverrouillage dans laquelle elle est écartée du second rail de guidage (54) et une position de verrouillage dans laquelle elle prend appui sur le second rail de guidage (54) pour repousser transversalement le panneau (57) soit dans sa position d'obturation enchâssée lorsque le panneau (57) est initialement en position intermédiaire de dégagement en regard de la baie (50), soit dans sa position de blocage, en appui serré contre l'élément de structure (52.1) lorsque le panneau (57) est en position d'ouverture quelconque.

12. Dispositif de guidage selon l'une des revendications précédentes, **caractérisé en ce que**, pour un panneau (8, 34) disposé dans un plan sensiblement vertical, le premier rail de guidage (6, 32) et le premier organe d'articulation (11, 37) sont disposés supérieurement tandis que le second rail de guidage (7, 3) et le second organe d'articulation (12, 38) sont disposés inférieurement.

13. Dispositif de guidage selon la revendication 12, **caractérisé en ce qu'**en position intermédiaire de dégagement à coulissement libre, le panneau (57) est suspendu au rail supérieur de guidage (53), sans appui vertical de l'organe d'articulation inférieur (59) contre le rail inférieur de guidage (54).

14. Dispositif de guidage selon l'une des revendications précédentes, **caractérisé en ce que** la première extrémité (11.2, 12.2, 37.2, 38.2) de chaque organe d'articulation (11, 12, 37, 38) constitue un patin longitudinal cylindrique qui est reçu dans une surface de guidage (6.1, 7.1) en creux du rail de guidage correspondant.

15. Dispositif de guidage selon l'une des revendications précédentes, **caractérisé en ce qu'**au moins l'un des deux organes d'articulation est réalisé en une pièce, sous la forme d'un profilé (11, 12) s'étendant sur toute la longueur du panneau.

16. Dispositif de guidage selon l'une des revendications précédentes, **caractérisé en ce qu'**au moins l'un des deux organes d'articulation se compose d'au moins deux biellettes indépendantes (37, 38) articulées chacune au panneau (34) et au rail de guidage (32, 33) correspondant indépendamment l'une de l'autre.

## Patentansprüche

1. Führungsvorrichtung für ein gleitendes und sich hin und her bewegendes Paneel (8, 34, 57), das beweglich zwischen einer Verschluss- und einer Öffnungsposition einer in einer feststehenden Glasscheibe oder einem Karosseriepaneel eines Personenkraftwagens, genannt Strukturetement (2, 31, 51), ausgebildeten Öffnung (1, 30, 50) angebracht ist, **dadurch gekennzeichnet, dass** sie eine erste und eine zweite Führungsschiene (6, 7, 32, 33, 53, 54) umfasst, die fest an der inneren Fläche des Strukturelementes angebracht sind,
wobei mindestens ein erstes Gelenkorgan (11, 37, 58) mit der ersten Schiene (6, 32, 53) und mindestens ein zweites Gelenkorgan (12, 38, 59) mit der zweiten Schiene (7, 33, 54) zusammenwirkt, wobei ein Ende (11.1, 12.1, 37.1, 37.2, 58.2, 59.2) eines jeden der Gelenkorgane eng mit dem Verschlusspaneel (8, 34, 57) verbunden ist,
wobei die Gelenkorgane (11, 12, 37, 38, 58, 59) derart konzipiert sind, dass das Verschlusspaneel (8, 34, 57):
- in eine Gleitfläche einlaufen kann, die parallel zum Strukturelement (2, 31, 51) liegt und in dem die Gelenkorgane in den entsprechenden Gleitschienen nach einer Gleitrichtung (c, c', c") gleiten können;
- in eine dem Strukturelement (2, 31, 51) entsprechende Verschlussfläche einlaufen kann, um die Öffnung (1, 30, 50) bündig zu verschließen,
wobei der Übergang von der Gleitfläche zur Verschlussfläche und umgekehrt in etwa senkrecht zur Gleitrichtung (c, c', c") verläuft, unter der Wirkung von Verriegelungsmitteln (17, 19), die mindestens an eine der Gleitschienen (6, 7, 32, 33, 53, 54) angebracht sind und die auf mindestens ein Gelenkorgan (11, 37, 58, 12, 38, 59) wirken, damit das Verschlusspaneel (8, 34, 57) dauernd in etwa parallel zu der vom Strukturelement definierten Ebene bleibt, sich die Ränder gleichzeitig in die Öffnung (1, 30, 50) beim Schließen einpassen und, beim Öffnen, gleichzeitig aus der Öffnung (1, 30, 50) freigesetzt werden.

2. Führungsvorrichtung nach Anspruch 1, **dadurch gekennzeichnet, dass** sie mindestens ein erstes und ein zweites Gelenkorgan (11, 12; 37, 38,; 58, 59) aufweist, das jeweils ein erstes Ende (11.2, 12.2; 37.2, 38.2, ; 58.2, 59.2) besitzt, welches auf der betroffenen Führungsschiene (6, 7; 32, 33; 53, 54) montiert ist, um in Gleitrichtung (c; c'; c") zu gleiten,
wobei es drehbar um eine parallel zu dieser Richtung liegenden Achse (15, 16; 55, 56) angebracht ist, sowie ein zweites Ende (11.1, 12.1; 37.1, 38.1,; 58.1, 59.1), das über ein Gelenk mit dem entsprechenden Rand (8.1, 8.2; 57.1, 57.2) des Paneels (8; 34; 57) verbunden ist, das sich um eine Achse (13, 14; 41, 42; 63, 64) dreht, die parallel zur Gleitrichtung liegt und,
dass, wenn sich das Paneel (8, 34, 37) in der verschlossenen Position befindet, die zwei Gelenkachsen (13, 15, 63, 65) des ersten Gelenkorgans (11, 37, 58) einerseits und die zwei Gelenkachsen (14, 16, 64, 56) des zweiten Gelenkorgans (12, 38, 59) andererseits jeweils eine erste Ebene (P1, R1) und eine zweite Ebene (P2, R2) definieren, wobei diese Ebenen in etwa senkrecht zueinander stehen, wobei die erste Ebene (P1, R1) des ersten Gelenkorgans (11, 37, 58) in etwa stärker im Verhältnis zum Paneel (8, 34, 57) geneigt ist als die zweite Ebene (P2, R2) des zweiten Gelenkorgans (12, 38, 59).

3. Führungsvorrichtung nach Anspruch 2, **dadurch gekennzeichnet, dass** in der geschlossenen Position, die erste Ebene (P1, R1) des ersten Gelenkorgans in etwa senkrecht zum Paneel (8, 34, 57) liegt, während die zweite Ebene (P2, R2) des zweiten Gelenkorgans in etwa parallel zum Paneel (8, 34, 57) liegt.

4. Führungsvorrichtung nach Anspruch 3, **dadurch gekennzeichnet, dass** in der geschlossenen Position, die erste Ebene (P1, R1) des ersten Gelenkorgans mit dem Paneel (8, 34, 57) einen Winkel von mehr als 50° bildet, während die zweite Ebene (P2, R2) des zweiten Gelenkorgans mit dem Paneel (8, 34, 57) einen Winkel von weniger als 40° bildet.

5. Führungsvorrichtung nach Anspruch 4, **dadurch gekennzeichnet, dass** in der geschlossenen Position, die erste Ebene (P1, R1) des ersten Gelenkorgans mit dem Paneel (8, 34, 57) einen Winkel von mehr als 70° bildet, während die zweite Ebene (P2, R2) des zweiten Gelenkorgans mit dem Paneel (8, 34, 57) einen Winkel von weniger als 20° bildet.

6. Führungsvorrichtung nach einem der vorhergehenden Ansprüche, **dadurch gekennzeichnet, dass** in der geschlossenen Position des Paneels (8), das zweite Gelenkorgan (12) mit dem Paneel ein sich abstemmendes Kniehebelelement bildet, welches das Paneel (8) gegen eine Anschlagfläche (6.2) zwingt, die gegenüber dem Strukturelement fest steht.

7. Führungsvorrichtung nach einem der vorhergehenden Ansprüche, **dadurch gekennzeichnet, dass** das Paneel (8, 57) in der Nähe seines dem zweiten Verschlussorgan (12, 59) entsprechenden Randes (8.2, 57.2) ein Verriegelungsorgan (19, 70) aufweist, das zwischen einer verdeckten entriegelten Position und einer verriegelten Position beweglich ist und welches in der verriegelten Position, wobei das Paneel (8, 57) sich in der Position befindet, in der die Öffnung verschlossen ist, mit einer zweiten Führungsschiene (7, 54) zusammenwirkt, um das Paneel (8, 57) in dieser Position zu verriegeln.

8. Führungsvorrichtung nach Anspruch 7, **dadurch gekennzeichnet, dass** das Verriegelungsorgan (19) elastisch mit der zweiten Führungsschiene (7) zusammenwirkt, um das Paneel (8) in der freistehenden Zwischenposition bei freier Gleitfähigkeit zu halten.

9. Führungsvorrichtung nach Anspruch 8, **dadurch gekennzeichnet, dass** in der freistehenden Zwischenposition des Paneels (8), das Verriegelungsorgan (19) derart mit der zweiten Führungsschiene (7) über eine Nockenfläche (7.2) zusammenwirkt, dass eine ständige Rückholkraft in Querrichtung auf das Paneel (8) wirkt, um es in die freistehende Zwischenposition zurückzuführen.

10. Führungsvorrichtung nach Anspruch 7, **dadurch gekennzeichnet, dass** das Verriegelungsorgan (70) mit der zweiten Führungsschiene (54) zusammenwirkt, um das Gleiten des Paneels (57) in eine beliebige, teilweise oder vollständige Öffnungsposition, die in Längsrichtung gegenüber der Öffnung versetzt ist, zu verhindern.

11. Führungsvorrichtung nach Anspruch 10, **dadurch gekennzeichnet, dass** das Verriegelungsorgan (70) eine Nocke (73) aufweist, die zwischen einer Entriegelungsposition, in der sie von der zweiten Führungsschiene (54) absteht und einer Verriegelungsposition, in der sie sich auf die zweite Führungsschiene (54) abstützt, beweglich ist, um das Paneel (57) in Querrichtung entweder in die eingelassene Verschlussposition zu schieben, wenn dieses sich anfänglich gegenüber der Öffnung (50) in der freistehenden Zwischenposition befand, oder um das Paneel (57) in die Blockierposition zu schieben, in der es eng an das Strukturelement (52.1) anliegt, wenn die Ausgangslage dieses Paneels (57) eine beliebige öffnungsposition war.

12. Führungsvorrichtung nach einem der vorhergehenden Ansprüche, **dadurch gekennzeichnet, dass** für ein sich in einer annähernd vertikalen Ebene befindliches Paneel (8, 34), die erste Führungsschiene (6, 32) und das erste Gelenkorgan (11, 37) oben angebracht sind, während die zweite Führungsschiene (7, 3) und das zweite Gelenkorgan (12, 38) unten angebracht sind.

13. Führungsvorrichtung nach Anspruch 12, **dadurch gekennzeichnet, dass** in der freistehenden Zwischenposition mit freier Verschiebungsfähigkeit, das Paneel (57) von der oberen Führungsschiene (53) hängt, ohne das sich das untere Gelenkorgan (59) vertikal gegen die untere Führungsschiene (54) abstützt.

14. Führungsvorrichtung nach einem der vorhergehenden Ansprüche, **dadurch gekennzeichnet, dass** das erste Ende (11.2, 12.2, 37.2, 38.2) eines jeden Gelenkorgans (11, 12, 37, 38) eine zylindrische Gleitkufe in Längsrichtung bildet, die von einer als Aushöhlung der entsprechenden Gleitschiene ausgebildeten Führungsfläche (6.1, 7.1) aufgenommen wird.

15. Führungsvorrichtung nach einem der vorhergehenden Ansprüche, **dadurch gekennzeichnet, dass** mindestens eines der zwei Gelenkorgane aus einem einzigen Teil besteht, das die Form eines sich über die gesamte Länge des Paneels erstreckenden Profils (11, 12) aufweist.

16. Führungsvorrichtung nach einem der vorhergehenden Ansprüche, **dadurch gekennzeichnet, dass** mindestens eines der zwei Gelenkorgane aus mindestens zwei unabhängigen Gelenkarme (37, 38) besteht, die jeweils schwenkbar an das Paneel (34) und an die entsprechende Führungsschiene (32, 33) unabhängig voneinander befestigt sind.

## Claims

1. Guiding device for a swinging-sliding panel (8, 34, 57) movable between positions of closing and opening an aperture (1, 30, 50) made in a fixed window or a body panel of a motor vehicle, called structural element (2, 31, 51), **characterised in that** it comprises a first and a second guide rail (6, 7, 32, 33, 53, 54) fixedly mounted on the inner face of the said structural element,
at least one first articulation member (11, 37, 58) cooperating with the said first rail (6, 32, 53) and at least one second articulation member (12, 38, 59) cooperating with the said second rail (7, 33, 54), one end (11.1, 12.1, 37.1, 37.2, 58.2, 59.2) of each of the said articulation members being fastened to the said closing panel (8, 34, 57),
the said articulation members (11, 12, 37, 38, 58, 59) being designed so that the said closing panel (8, 34, 57) can come:
- into a sliding area which is parallel to the said structural element (2, 31, 51) and in which the said articulation elements can slide in the corresponding guide rails in a sliding direction (c, c', c");
- into a closing area corresponding to the said structural element (2, 31, 51), in order to close the said aperture (1, 30, 50) in a flush manner,
the movement from the said sliding area to the said closing area, and vice versa, being performed substantially perpendicularly to the sliding direction (c, c', c") under the action of locking means (17, 19) mounted on at least one of the guide rails (6, 7, 32, 33, 53, 54), and acting on at least one of the said articulation members (11, 37, 58, 12, 38, 59) so that the said closing panel (8, 34, 57) continuously remains substantially parallel to the plane defined by the said structural element, all of the edges fitting simultaneously into the said aperture (1, 30, 50) upon shutting, and disengaging simultaneously from the said aperture (1, 30, 50) upon opening.

2. Guiding device according to Claim 1, **characterised in that** it comprises at least one first and one second articulation member (11, 12; 37, 38; 58, 59) each having a first end (11.2, 12.2; 37.2, 38.2; 58.2, 59.2) mounted on the guide rail concerned (6, 7; 32, 33; 53, 54) in order to slide in the sliding direction (c; c'; c") and to pivot about an axis (15, 16; 55, 56) parallel to this direction, and a second end (11.1, 12.1; 37.1, 38.1; 58.1, 59.1) articulated to a corresponding edge (8.1, 8.2; 57.1, 57.2) of the panel (8; 34; 57) about an axis (13, 14; 41, 42; 63, 64) parallel to the sliding direction, and
**in that**, when the panel (8, 34, 57) is in its closed position, the two pivot axes (13, 15, 63, 55) of the first articulation member (11, 37, 58) on the one hand and the two pivot axes (14, 16, 64, 56) of the second articulation member (12, 38, 59) on the other hand define respectively a first plane (P1, R1) and a second plane (P2, R2) which are approximately perpendicular to each other, the first plane (P1, R1) of the first articulation member (11, 37, 58) being approximately more inclined relative to the panel (8, 34, 57) than the second plane (P2, R2) of the second articulation member (12, 38, 59).

3. Guiding device according to Claim 2, **characterised in that**, in the closed position, the first plane (P1, R1) of the first articulation member is approximately perpendicular to the panel (8, 34, 57), whereas the second plane (P2, R2) of the second articulation member is approximately parallel to the panel (8, 34, 57).

4. Guiding device according to Claim 3, **characterised in that**, in the closed position, the first plane (P1, R1) of the first articulation member forms an angle greater than 50° with the panel (8, 34, 57), whereas the second plane (P2, R2) of the second articulation member forms an angle less than 40° with the panel (8, 34, 57).

5. Guiding device according to Claim 4, **characterised in that**, in the closed position, the first plane (P1, R1) of the first articulation member forms an angle greater than 70° with the panel (8, 34, 57), whereas the second plane (P2, R2) of the second articulation member forms an angle less than 20° with the panel (8, 34, 57).

6. Guiding device according to one of the preceding claims, **characterised in that**, in the closed position of the panel (8), the second articulation member (12) forms a braced toggle-joint element with the panel, forcing the panel (8) to bear against an abutment surface (6.2) fixed relative to the structural element (2).

7. Guiding device according to one of the preceding claims, **characterised in that** the panel (8, 57) is provided, in the vicinity of its edge (8.2, 57.2) corresponding with the second articulation member (12, 59), with a locking member (19, 70) which is movable between a retracted unlocked position and a locked position, and which, when it is in the locked position and the panel (8, 57) is in its position of closing the aperture, cooperates with the second guide rail (7, 54) to lock the panel (8, 57) in this position.

8. Guiding device according to Claim 7, **characterised in that** the locking member (19) cooperates resiliently with the second guide rail (7) to keep the panel (8) in its freely sliding intermediate disengagement position.

9. Guiding device according to Claim 8, **characterised in that**, in the intermediate disengagement position of the panel (8), the locking member (19) cooperates with the second guide rail (7) by way of a cam surface (7.2) so as to exert a continuous transverse force for the return of the panel (8) towards its intermediate disengagement position.

10. Guiding device according to Claim 7, **characterised in that** the locking member (70) cooperates with the second guide rail (54) to block the sliding of the panel (57) in any open position, total or partial, longitudinally offset relative to the aperture.

11. Guiding device according to Claim 10, **characterised in that** the locking member (70) includes a cam (73) movable between an unlocking position in which it is separated from the second guide rail (54) and a locking position in which it bears on the second guide rail (54) in order to push the panel (57) away transversely either into its fitted closed position when the panel (57) is initially in the intermediate disengagement position facing the aperture (50), or into its blocked position, bearing tightly against the structural element (52.1) when the panel (57) is in any open position.

12. Guiding device according to one of the preceding claims, **characterised in that**, for a panel (8, 34) arranged in a substantially vertical plane, the first guide rail (6, 32) and the first articulation member (11, 37) are arranged uppermost, whereas the second guide rail (7, 33) and the second articulation member (12, 38) are arranged lowermost.

13. Guiding device according to Claim 12, **characterised in that**, in the freely sliding intermediate disengagement position, the panel (57) is suspended from the upper guide rail (53) without the lower articulation member (59) bearing vertically against the lower guide rail (54).

14. Guiding device according to one of the preceding claims, **characterised in that** the first end (11.2, 12.2, 37.2, 38.2) of each articulation member (11, 12, 37, 38) constitutes a cylindrical longitudinal runner which is received in a recessed guiding surface (6.1, 7.1) of the corresponding guide rail.

15. Guiding device according to one of the preceding claims, **characterised in that** at least one of the two articulation members is made in one piece, in the form of a profile (11, 12) extending over the entire length of the panel.

16. Guiding device according to one of the preceding claims, **characterised in that** at least one of the two articulation members is composed of at least two independent links (37, 38) each articulated to the panel (34) and to the corresponding guide rail (32, 33) independently of one another.
